# EUROPEAN PATENT SPECIFICATION

(11) **EP 3 893 308 B1**
(45) Date of publication and mention of the grant of the patent: **08.02.2023**
(21) Application number: 19927347.5
(22) Date of filing: 06.12.2019
(51) Int. Cl.: H01M 4/131, H01M 4/62, H01M 10/0562, C01G 30/00, C01G 19/00, C01D 15/00, C01G 17/00, H01M 10/052

(54) **INORGANIC SULFIDE SOLID ELECTROLYTE HAVING HIGH AIR STABILITY, AND PREPARATION METHOD AND USE THEREOF**
ANORGANISCHER SULFIDFESTELEKTROLYT MIT HOHER LUFTSTABILITÄT, VERFAHREN ZU SEINER HERSTELLUNG UND SEINE VERWENDUNG
ÉLECTROLYTE SOLIDE À BASE DE SULFURE INORGANIQUE PRÉSENTANT UNE STABILITÉ À L'AIR ÉLEVÉE, SON PROCÉDÉ DE PRÉPARATION ET SON UTILISATION

(30) Priority: 30.04.2019 CN 201910358953
(43) Date of publication of application: 13.10.2021
(73) Proprietor: China Automotive Battery Research Institute Co, Ltd., Beijing 101407 (CN); The University of Western Ontario, London, ON N6A 3K7 (CA)
(72) Inventor: SUN, Xueliang, London Ontario N6A 3K7 (CA); LIANG, Jianwen, London Ontario N6A 3K7 (CA); LI, Xiaona, London Ontario N6A 3K7 (CA); HUANG, Huan, London Ontario N6A 3K7 (CA); LU, Shigang, Beijing 101407 (CN); ZHANG, Li, Beijing 101407 (CN); ZHAO, Shangqian, Beijing 101407 (CN)
(74) Representative: Micheli & Cie SA
(86) International application number: PCT/CN2019/123481
(87) International publication number: WO 2020/220676

(56) References cited:
- CN-A- 101 821 199
- CN-A- 101 861 673
- CN-A- 103 531 841
- CN-A- 105 009 332
- CN-A- 108 258 303
- CN-A- 108 269 964
- CN-A- 108 352 567
- CN-A- 109 690 696
- CN-A- 110 085 908
- JP-A- 2019 102 355
- US-A1- 2011 274 984
- US-A1- 2014 370 398
- US-A1- 2018 309 167
- US-B2- 8 075 865

## Description

### Technical Field

The present invention belongs to the technical field of lithium-ion batteries, and specifically relates to a method for improving the air stability of an inorganic sulfide solid electrolyte, the obtained material and use thereof in an all-solid-state lithium secondary battery.

### Background Art

Lithium ion secondary batteries have developed rapidly due to their advantages such as high energy density and long service life since its commercialization in the early 1990s. However, currently lithium-ion batteries used commonly are liquid-state batteries, which contain flammable organic electrolyte solutions and thus have serious potential safety hazards. In recent years, the frequent occurrence of safety accidents on liquid lithium-ion power batteries has greatly restricted the further use of this system. The non-flammable inorganic solid materials used as the electrolytes of lithium-ion batteries can not only eliminate the potential safety hazards caused by the leakage of organic electrolyte solutions and thermal runaway inside the batteries during the use of batteries, but also enable batteries to be used under extreme conditions such as high temperature and low temperature, which further improves the value of lithium secondary batteries and extends the application fields thereof. Therefore, the development of an inorganic solid electrolyte with high stability and high lithium-ion conductivity is a key for the development of a lithium secondary battery with high safety.

Among the electrolyte varieties classified based on the type of the negative ions in the inorganic solid electrolyte materials, oxide solid electrolytes have been much more studied and sulfide solid electrolytes have better potential of application (Kerman K, Luntz A, Viswanathan V, et al. practical challenges hindering the development of solid state Li ion batteries [J]. Journal of The Electrochemical Society, 2017, 164 (7): A1731-A1744.). The oxide solid electrolyte is mainly based on the systems such as Li₂O-LaO-ZrO₂, Li₂O-B₂O₃, and Li₂O-LiCl (Thangadurai V, Narayanan S, Pinzaru D. Garnet-type solid-state fast Li ion conductors for Li batteries: critical review [J]. Chemical Society Reviews, 2014, 43 (13): 4714-4727), but generally provided with low the ion conductance. Compared with oxide electrolytes, sulfide electrolytes show higher ion conductance, because the binding force thereof to cations is lower due to the low electronegativity of sulfide ions, and the radius of the sulfide ion is larger, which is beneficial to the migration of lithium ions. For example, the lithium ion conductivity of the following materials is higher than that of organic electrolytes: Li₁₀GeP₂S₁₂ material discovered in 2010 (the ion conductivity is as high as 12 mS cm⁻¹ at room temperature, Kamaya N, Homma K, Yamakawa Y, et al. A lithium superionic conductor [J]. Nature materials, 2011, 10 (9): 682) and Li_{9.54}Si_{1.74}P_{1.44}S_{11.7}Cl_{0.3} material discovered in 2015 (the ion conductivity is as high as 25 mS cm⁻¹ at room temperature, Kato Y, Hori S, Saito T et al. High-power all-solid-state batteries using sulfide superionic conductors [J]. Nature Energy, 2016, 1 (4): 16030). At present, the research on inorganic sulfide electrolytes mainly focuses on the systems such as Li₂S-P₂S₅, Li₂S-MSₓ-P₂S₅ and Li₂S-P₂S₅-LiX (Sun C, Liu J, Gong Y, et al. Recent advances in all-solid-state rechargeable lithium batteries [J]. Nano Energy, 2017, 33: 363-386).

However, the currently reported inorganic sulfide electrolytes containing P element are not stable under air conditions. This type of sulfide electrolyte reacts irreversibly with oxygen gas, water vapor, carbon dioxide and the like in the air atmosphere, resulting in structural changes and a decrease in ion conductivity, which severely restricts its application in all-solid-state lithium batteries. In response to this problem, a lot of research has focused on the improvement through the introduction of additives and surface protective layers. For example, a composite solid electrolyte material uses a sulfide electrolyte material as the inner layer, and a protective layer of lithium borate and the like as the outer shell (Yang Rong et al., Chinese Patent CN106887638A). In addition, the thermal/air stability of the material can be improved by doping a small amount of low-valence metal elements or a small amount of oxide LMO (M=Si, P, Ge, B, Al, Ga, In) into the sulfide electrolyte system (Xu Xiaoxiong, Qiu Zhijun, Huang Zhen, Chen Wanchao, Chen Xiaotian, Chinese Patent CN10353184A; and Bachman J C, Muy S, Grimaud A, et al. Inorganic solid-state electrolytes for lithium batteries: mechanisms and properties governing ion conduction [J]. Chemical reviews, 2015, 116 (1): 140-162.). Theoretically, the ion conductivity of the materials can be regulated by adjusting the factors such as lithium ion migration channel and the binding force of sulfide ions to cations in the sulfide electrolyte material by means of the structure of the solid solution phase, so as to obtain inorganic sulfide electrolytes with higher ion conductivity. Furthermore, its electronic structure can also be changed by means of the structure of the solid solution phase to improve its chemical properties, so as to achieve better stability in the air, and realize the possibility of extensive use in an air environment/drying chamber.

### Summary of the Invention

The purpose of the present invention is to provide a method for improving the air stability of the inorganic sulfide electrolyte and the use of the material obtained by the method in an all-solid-state lithium secondary battery. The method is simple and efficient, and the obtained material is simple to prepare, and has low production cost, good air stability, and high lithium ion conductivity, and it is expected to solve the actual application problem of the inorganic sulfide electrolyte as the electrolyte of a high-performance all-solid-state lithium secondary battery.

By the research of the present invention, it was found that an inorganic sulfide solid electrolyte material with a solid solution phase structure can be formed by replacing some or all of P elements in a sulfide electrolyte with Sb, thereby obtaining higher air stability and higher ion mobility. In particular, as the amount of Sb substitution in the inorganic sulfide solid electrolyte increases, the obtained material has better air stability and can be used in all-solid-state lithium secondary batteries.

Specifically, the present invention provides an inorganic sulfide electrolyte material represented by the following formula (I),

Li₁₀M(P₁₋ₐSbₐ)₂S₁₂, (I);

wherein, M is one or more of Ge, Si and Sn, 0.01≤a≤1; preferably, 0.01≤a≤0.2. For example, specifically, a may be selected from 0.01, 0.025, 0.05, 0.075, 0.1, 0.125, 0.15, 0.2, 0.3, 0.4 or 1.

Specifically, the inorganic sulfide electrolyte material represented by the formula (I) is Li₁₀Ge(P_{0.99}Sb_{0.01})₂S₁₂, Li₁₀Ge(P_{0.975}Sb_{0.025})₂S₁₂, Li₁₀Ge(P_{0.925}Sb_{0.075})₂S₁₂, Li₁₀Ge(P_{0.9}Sb_{0.1})₂S₁₂, Li₁₀Ge(P_{0.875}Sb_{0.125})₂S₁₂, Li₁₀Sn(P_{0.95}Sb_{0.05})₂S₁₂ or Li₁₀Si(P_{0.95}Sb_{0.05})₂S₁₂.

The present invention also provides an inorganic sulfide electrolyte material represented by the following formula (II),

Li₆(P₁₋ₐSbₐ)S₅X, (II);

wherein, X is one or more of F, Cl, Br, and I, 0.01≤a≤1; preferably, 0.025≤a≤0.2. For example, specifically, a may be selected from 0.025, 0.05, 0.075, 0.1, 0.15, 0.2, 0.5 or 1.

Specifically, the inorganic sulfide electrolyte material represented by the formula (II) is Li₆(P_{0.975}Sb_{0.025})S₅Cl or Li₆(P_{0.95}Sb_{0.05})S₅Cl.

The present invention also provides an inorganic sulfide electrolyte material represented by the following formula (III),

Li₃(P₁₋ₐSbₐ)S₄, (III);

wherein, 0.01≤a≤1; preferably, 0.05≤a≤0.3. Further preferably, a is selected from 0.05, 0.1, 0.2 or 0.3.

The above-mentioned inorganic sulfide electrolyte materials of the present invention can be prepared according to conventional techniques in the art.

For example, the required raw materials can be mixed according to the proportion, and ground, and then subjected to heat treatment to obtain the sulfide electrolyte materials represented by the formula (I), formula (II) and formula (III), wherein the time for the grinding is preferably greater than 3 h, and/or the temperature for the heat treatment is preferably greater than 300°C and less than 600°C; and/or the temperature for the heat treatment is preferably greater than 230°C and less than 600°C. The present invention is a solid solution phase type sulfide solid electrolyte material.

By further research, it was found that, for any of the above-mentioned sulfide solid electrolyte materials, as the amount of Sb in the solid solution phase increases, the obtained inorganic sulfide solid electrolyte material has higher air stability. Furthermore, the lithium ion conductivity of the material can be further adjusted by adjusting the ratio of P and Sb elements in the solid solution, and the electroconductivity thereof can exceed those of other existing solid electrolytes and organic liquid electrolytes.

Further, any one of the above-mentioned sulfide solid electrolyte materials is of crystalline type, amorphous type, or crystalline-amorphous composite type.

Further, a working temperature of any one of the above-mentioned sulfide solid electrolyte materials is -100°C to 300°C.

The present invention also provides the use of any one of the above-mentioned sulfide solid electrolyte materials in the preparation of an all-solid-state lithium secondary battery.

Specifically, the present invention provides an all-solid-state lithium secondary battery, comprising a positive electrode, an electrolyte material, and a negative electrode, wherein the electrolyte material is the sulfide electrolyte material described in the above technical solutions or the sulfide electrolyte material prepared by the above technical solutions.

The present invention uses Sb to replace some or all of the P elements in the sulfide electrolyte to form an inorganic sulfide solid electrolyte material with a solid solution phase structure, thereby achieving higher air stability and higher ion mobility. Compared with the prior art, the present invention provides a novel method for improving the air stability of sulfide by element substitution. The method is simple and efficient. The obtained sulfide electrolyte can be stably stored under air conditions without any protection of claddings or additives. This type of material is simple to prepare and has low production cost, and meanwhile, the obtained inorganic sulfide solid electrolyte material has controllable ion conductivity and shows excellent performance as an inorganic electrolyte and electrode material additive in an all-solid-state lithium battery.

The present invention has the following advantages:
1) Sulfide solid electrolytes having a variety of different types of solid solution phase structures are obtained by adjusting the proportion of P and Sb in the inorganic sulfide solid electrolyte materials. With the increase of the amount of Sb substitution, the obtained inorganic sulfide solid electrolyte material has higher air stability, and thus the present invention can further realize the use of the sulfide solid electrolyte material in the drying chamber, simplify the production process of solid-state batteries and reduce production costs.
2) In the sulfide solid electrolyte with a solid solution phase structure, the chemical properties of the material can be adjusted by replacing some of P elements with Sb elements, thereby obtaining high chemical stability and chemical compatibility with the electrode material, and reducing the reaction activity of the electrolyte with lithium metal and common positive and negative materials for lithium ion batteries.
3) The crystal structure and electronic structure of the material can be easily regulated by adjusting the ratio of P and Sb in the inorganic sulfide solid electrolyte material, thereby further improving the electroconductivity of the material. Among the inorganic sulfide solid electrolyte materials with this type of solid solution phase structure, a part of the electrolyte materials reach or even exceed the electroconductivity of the existing sulfide solid electrolytes.
4) The proposal and acquisition of the sulfide solid electrolyte with a solid solution phase structure help to further understand the issue of chemical stability of the electrolyte and the issue of migration of lithium ions in the solid electrolyte in terms of theoretical research, and further guide the development and research of sulfide electrolytes with high electroconductivity. In practical application, many different types of electrolyte materials with high conductivity and high air stability can be obtained.

### Brief Description of the Drawings

Figure 1 is an x-ray diffraction pattern obtained when a=0.01 in Example 1;
Figure 2 shows some x-ray diffraction patterns obtained from the system in Example 1;
Figure 3 shows graphs of electrochemical impedance and ion conductivity at different temperatures obtained when a=0.01 in Example 1;
Figure 4 is a graph showing the relationship between the ion conductivity and the value of "a" of the material obtained in Example 1;
Figure 5 is an x-ray diffraction pattern obtained when a=0.025 in Example 2;
Figure 6 shows some x-ray diffraction patterns obtained from the system in Example 2;
Figure 7 shows graphs of electrochemical impedance and ion conductivity at different temperatures obtained when a=0.025 in Example 2;
Figure 8 is a graph of the relationship between the ion conductivity and the value of "a" of the material obtained in Example 2;
Figure 9 is an x-ray diffraction pattern obtained when a=0.05 in Example 3;
Figure 10 shows graphs of electrochemical impedance and ion conductivity at different temperatures obtained when a=0.05 in Example 3;
Figure 11 is an x-ray diffraction pattern obtained when a=0.05 in Example 4;
Figure 12 shows graphs of electrochemical impedance and ion conductivity at different temperatures obtained when a=0.05 in Example 4;
Figure 13 shows graphs of electrochemical impedance and ion conductivity at different temperatures obtained when a=0.1 in Example 5;
Figure 14 shows comparison of XRD patterns of the Li₆(P_{0.975}Sb_{0.025})S₅Cl material before and after exposure to air in Application Example 1;
Figure 15 shows comparison of XRD patterns of the Li₆(P_{0.9}Sb_{0.1})S₅Cl material before and after exposure to air in Application Example 1;
Figure 16 shows graphs concerning comparison of the electrochemical impedance spectroscopies and comparison of ion conductivities (obtained by calculation) of the Li₆(P_{0.975}Sb_{0.025})S₅Cl material before and after exposure to air in Application Example 1;
Figure 17 shows graphs concerning comparison of the electrochemical impedance spectroscopies and comparison of the ion conductivities (obtained by calculation) of the Li₆(P_{0.9}Sb_{0.1})S₅Cl material before and after exposure to air in Application Example 1;
Figure 18 shows graphs of the ion conductivity varying with change in temperature and current-time relationship graphs at a constant external voltage of 0.3 V for the Li₆(P_{0.975}Sb_{0.025})S₅Cl and Li₆(P_{0.9}Sb_{0.1})S₅Cl in Application Example 1;
Figure 19 shows comparison of XRD patterns of the Li₁₀Ge(P_{0.875}Sb_{0.125})₂S₁₂ material before and after exposure to air in Application Example 2;
Figure 20 shows comparison graphs of ion conductivities of the solid electrolyte materials of Li₁₀Ge(P_{0.975}Sb_{0.025})₂S₁₂, Li₁₀Ge(P_{0.925}Sb_{0.075})₂S₁₂, Li₁₀Ge(P_{0.9}Sb_{0.1})₂S₁₂ and Li₁₀Ge(P_{0.875}Sb_{0.125})₂S₁₂ before and after exposure to air in Application Example 2.
Figure 21 is a graph showing the charging and discharging curve of an all-solid-state Li-LiCoO₂ secondary battery using the solid solution phase type Li₁₀Ge(P_{0.99}Sb_{0.01})₂S₁₂ solid electrolyte material obtained in Application Example 3.

### Specific Modes for Carrying Out the Embodiments

The following Examples are used to illustrate the present invention, but are not used to limit the scope of the present invention. If the specific technologies or conditions are not indicated in the Examples, the Examples shall be carried out according to those described in the literatures in the field, or according to the product specification. If the manufacturers for some reagents or instruments are not indicated, the reagents or instruments used are conventional products that can be purchased through regular channels.

### Example 1: Preparation of the solid electrolyte material Li₁₀Ge(P₁₋ₐSbₐ)₂S₁₂ (0.01≤a≤1)

15 mmoles of Li₂S (0.69 g), 3 mmoles of GeS₂ (0.411 g), (3-3a) mmoles of P₂S₅, and 3a mmoles of Sb₂S₅ powder were ground and mixed in a mortar, wherein 0.01≤a≤1. For example, if a=0.01, the formulation of various raw material was as follows: Li₂S 0.69 g, GeS₂ 0.411 g, P₂S₅ 0.66 g, and Sb₂S₅ 0.012 g. If a=0.1, the formulation of various raw material was as follows: Li₂S 0.69 g, GeS₂ 0.411 g, P₂S₅ 0.599 g, and Sb₂S₅ 0.121 g, and so on. After being ground and mixed, the mixture was put into a 50 ml zirconia ball mill tank for ball milling at a ball milling speed of 400 revolutions per minute for 12 h. After being ball milled, the samples were compressed into round tablets at 100 MPa using a powder tableting machine, and then sealed in a vacuum quartz tube for calcination. The calcination temperature was controlled by programmed temperature rise. The temperature was increased from room temperature to 550°C in 4 h, maintained at 550°C for 4 h, and then controlled to decrease to 50°C in 4 h, to obtain Li₁₀Ge(P₁₋ₐSbₐ)₂S₁₂ solid electrolyte material (0.01≤a≤1).

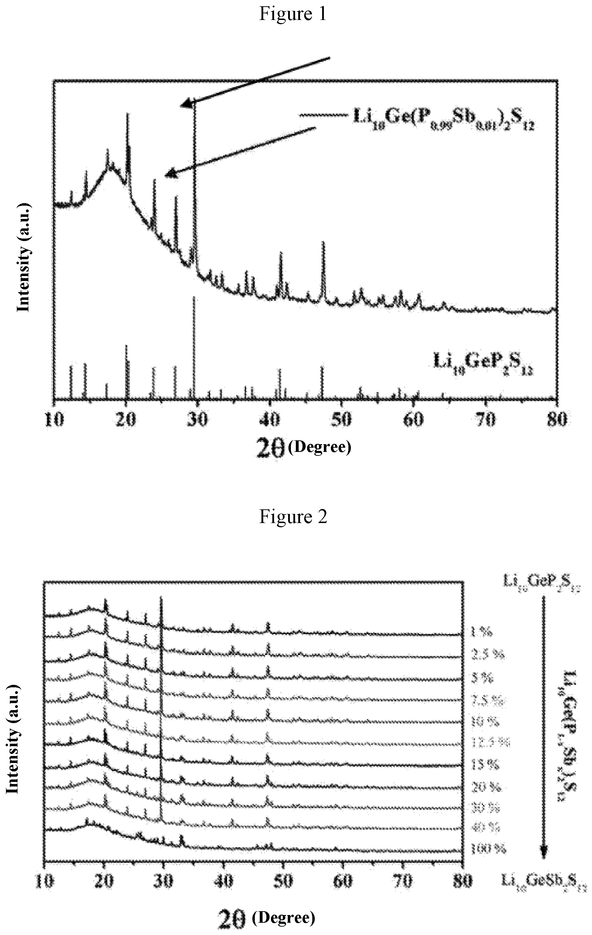

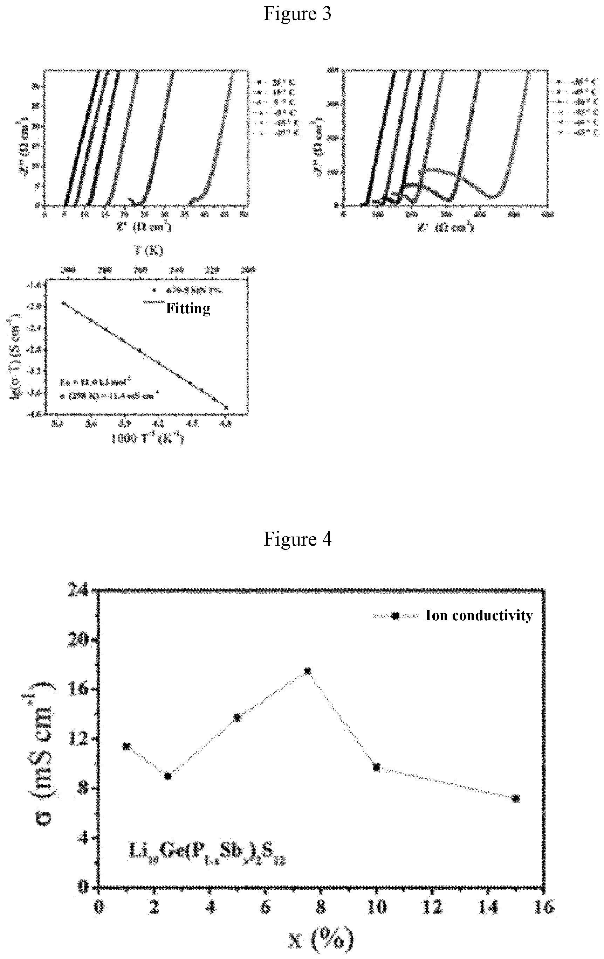

Figure 1 shows the X-ray diffraction patterns of the material when a=0.01 (i.e., the solid electrolyte material Li₁₀Ge(P_{0.99}Sb_{0.01})₂S₁₂) and Li₁₀GeP₂S₁₂ standard card (JPCDF: 04-020-5216). Figure 2 shows the X-ray diffraction patterns for the system with different values of a, wherein a is 0.01, 0.025, 0.05, 0.075, 0.1, 0.125, 0.15, 0.2, 0.3, 0.4 and 1 from top to bottom, respectively. Figure 3 shows graphs of electrochemical impedance at different temperatures and curve of ion conductivity varying with temperature for the material when a=0.01 (i.e., the solid electrolyte material Li₁₀Ge(P_{0.99}Sb_{0.01})₂S₁₂). It can be obtained from Figure 3 that the ion conductivity of this material is 11.4 millisiemens per centimeter at 25°C, and the activation energy is 11.0 kJ per mole. Figure 4 is a graph showing the relationship between the ion conductivity and the value of "a" of the solid solution phase sulfide electrolyte material obtained in this system. It is found from Figure 4 that when the value of "a" is 0.075 (i.e., the solid electrolyte material Li₁₀Ge(P_{0.925}Sb_{0.075})₂S₁₂), the material has the highest room-temperature ion conductivity of 17.5 millisiemens per centimeter, which is higher than the room-temperature ion conductivity (12 millisiemens per centimeter) of Li₁₀GeP₂S₁₂ material reported in literatures.

### Example 2: Preparation of the solid electrolyte material Li₆(P₁₋ₐSbₐ)S₅Cl (0.01≤a≤1)

20 mmoles of Li₂S (0.92 g), 8 mmoles of LiCl (0.336 g), (4-4a) mmoles of P₂S₅ and 4a mmoles of Sb₂S₅ powder were ground and mixed in a mortar, wherein 0.01≤a≤1. For example, if a=0.025, the formulation of various raw material was as follows: Li₂S 0.92 g, LiCl 0.336 g, P₂S₅ 0.866 g, and Sb₂S₅ 0.03 g. If a=0.1, the formulation of various raw material was as follows: Li₂S 0.92 g, LiCl 0.336 g, P₂S₅ 0.799 g, and Sb₂S₅ 0.121 g, and so on. After being ground and mixed, the mixture was put into a 50 ml zirconia ball mill tank for ball milling at a ball milling speed of 400 revolutions per minute for 12 h. After being ball milled, the samples were compressed into round tablets at 100 MPa using a powder tableting machine, and then sealed in a vacuum quartz tube for calcination. The calcination temperature was controlled by programmed temperature rise. The temperature was increased from room temperature to 550°C in 4 h, maintained at 550°C for 5 h, and then decreased to 50°C by natural cooling to obtain the solid electrolyte material Li₆(P₁₋ₐSbₐ)S₅Cl (0.01≤a≤1).

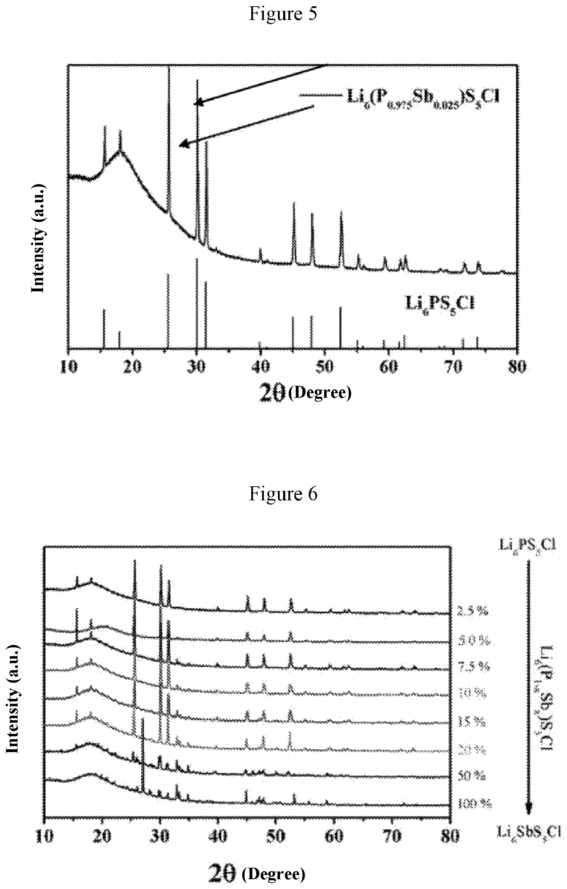

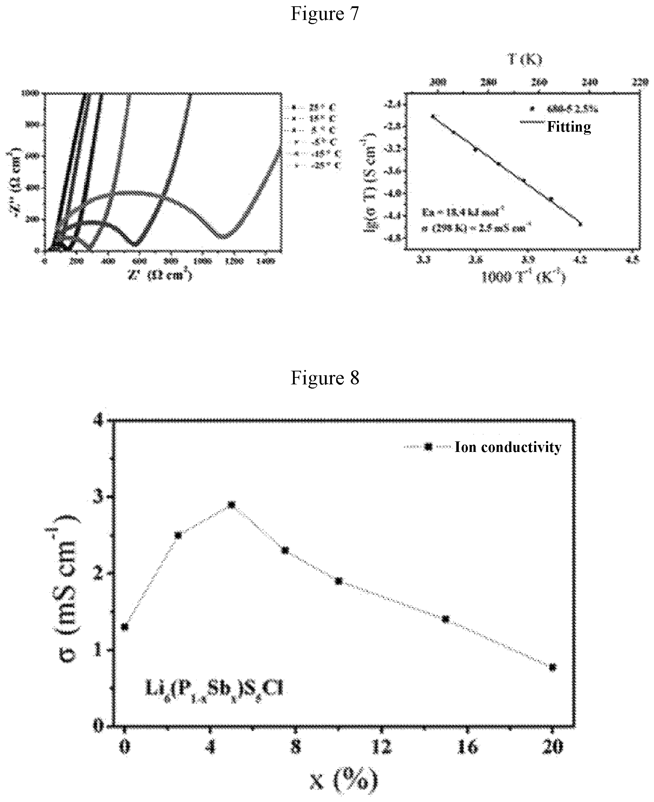

Figure 5 shows the X-ray diffraction patterns of the material when a=0.025 (i.e., the solid electrolyte material Li₆(P_{0.975}Sb_{0.025})S₅Cl) and Li₆PS₅Cl standard card (JPCDF: 04-018-1429). Figure 6 shows the X-ray diffraction patterns for the system with different values of "a", wherein a is 0.025, 0.05, 0.075, 0.1, 0.15, 0.2, 0.5 and 1 from top to bottom, respectively. Figure 7 shows graphs of electrochemical impedance at different temperatures and curve of ion conductivity varying with temperature for the material when a=0.025 (i.e., the solid electrolyte material Li₆(P_{0.975}Sb_{0.025})S₅Cl). It can be obtained from Figure 7 that the ion conductivity of this material is 2.5 millisiemens per centimeter at 25°C, and the activation energy is 18.4 kJ per mole. Figure 8 is a graph showing the relationship between the ion conductivity and the "a" value of the solid solution phase sulfide electrolyte material obtained in this system. It is found from Figure 8 that when the value of a is 0.05 (i.e., the solid electrolyte material Li₆(P_{0.95}Sb_{0.05})S₅Cl), the material has the highest room-temperature ion conductivity, i.e., 2.9 millisiemens per centimeter, which is higher than the room-temperature ion conductivity (1.3 millisiemens per cm) of the non-solid solution phase Li₆PS₅Cl material under the same conditions.

### Example 3: Preparation of the solid electrolyte material Li₁₀Sn(P_{0.95}Sb_{0.05})₂S₁₂

15 mmoles of Li₂S (0.69 g), 3 mmoles of SnS₂ (0.549 g), 2.85 mmoles of P₂S₅ (0.633 g), and 0.15 mmoles of Sb₂S₅ powder (0.061 g) were ground and mixed in a mortar. After being ground and mixed, the mixture was put into a 50 ml zirconia ball mill tank for ball milling at a ball milling speed of 400 revolutions per minute for 12 h. After being ball milled, the samples were compressed into round tablets at 100 MPa using a powder tableting machine, and then sealed in a vacuum quartz tube for calcination. The calcination temperature was controlled by programmed temperature rise. The temperature was increased from room temperature to 550°C in 4 h, maintained at 550°C for 4 h, and then controlled to decrease to 50°C in 4 h to obtain the solid electrolyte material Li₁₀Sn(P_{0.95}Sb_{0.05})₂S₁₂.

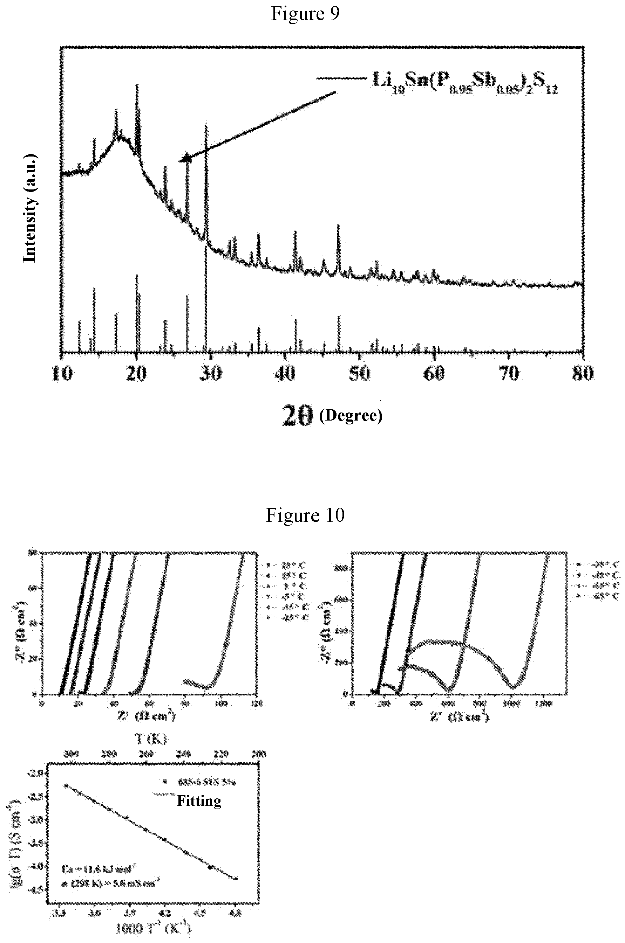

Figure 9 shows the X-ray diffraction pattern of the solid electrolyte material Li₁₀Sn(P_{0.95}Sb_{0.05})₂S₁₂. Figure 10 shows graphs of electrochemical impedance at different temperatures and curve of ion conductivity varying with temperature for this solid electrolyte material. It can be obtained from Figure 10 that the ion conductivity of this material is 5.6 millisiemens per centimeter at 25°C, and the activation energy is 11.6 kJ per mole. It is found from Figure 10 that the Li₁₀Sn(P_{0.95}Sb_{0.05})₂S₁₂ solid electrolyte material has a relatively high room-temperature ion conductivity, which is closer to the room-temperature ion conductivity (6.3 millisiemens per centimeter) of the Li₁₀SnP₂S₁₂ material reported in literatures.

### Example 4: Preparation of the solid electrolyte material Li₁₀Si(P_{0.95}Sb_{0.05})₂S₁₂

15 mmoles of Li₂S (0.69 g), 3 mmoles of SiS₂ (0.276 g), 2.85 mmoles of P₂S₅ (0.633 g), and 0.15 mmoles of Sb₂S₅ powder (0.061 g) were ground and mixed in a mortar. After being ground and mixed, the mixture was put into a 50 ml zirconia ball mill tank for ball milling at a ball milling speed of 400 revolutions per minute for 12 h. After being ball milled, the samples were compressed into round tablets at 100 MPa using a powder tableting machine, and then sealed in a vacuum quartz tube for calcination. The calcination temperature was controlled by programmed temperature rise. The temperature was increased from room temperature to 550°C in 4 h, maintained at 550°C for 4 h, and then controlled to decrease to 50°C in 4 h to obtain the solid electrolyte material Li₁₀Si(P_{0.95}Sb_{0.05})₂S₁₂.

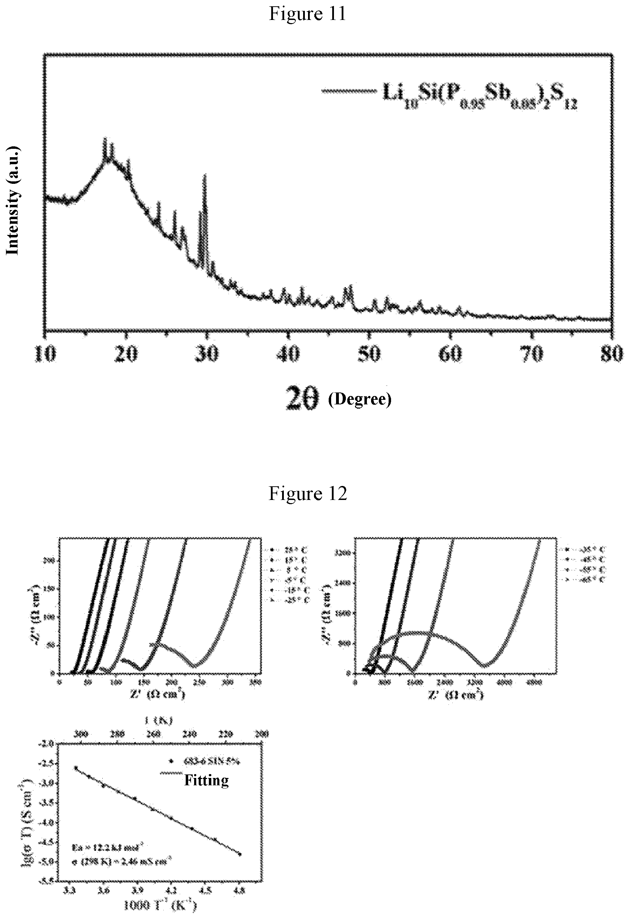

Figure 11 shows the X-ray diffraction pattern of the solid electrolyte material Li₁₀Si(P_{0.95}Sb_{0.05})₂S₁₂. Figure 12 shows graphs of electrochemical impedance at different temperatures and curve of ion conductivity varying with temperature for this solid electrolyte material. It can be obtained from Figure 12 that the ion conductivity of this material is 2.5 millisiemens per centimeter at 25°C, and the activation energy is 11.6 kJ per mole. It is found from Figure 12 that the Li₁₀Si(P_{0.95}Sb_{0.05})₂S₁₂ solid electrolyte material has a relatively high room-temperature ion conductivity, which is higher than the room-temperature ion conductivity (2 millisiemens per centimeter) of the Li₁₀SiP₂S₁₂ material reported in literatures.

### Example 5: Preparation of the solid electrolyte material Li₃(P₁₋ₐSbₐ)S₄ (0.01≤a≤1)

9 mmoles of Li₂S (0.414 g), (3-3a) mmoles of P₂S₅, and 3a mmoles of Sb₂S₅ powder were ground and mixed in a mortar, wherein 0.01≤a≤1. If a=0.05, the formulation of various raw material was as follows: Li₂S 0.414 g, P₂S₅ 0.633 g, and Sb₂S₅ 0.061 g. If a=0.1, the formulation of various raw material was as follows: Li₂S 0.414 g, P₂S₅ 0.599 g, and Sb₂S₅ 0.121 g, and so on. After being ground and mixed, the mixture was put into a 50 ml zirconia ball mill tank for ball milling at a ball milling speed of 400 revolutions per minute for 12 h. After being ball milled, the samples were compressed into round tablets at 100 MPa using a powder tableting machine, and then sealed in a vacuum quartz tube for calcination. The calcination temperature was controlled by programmed temperature rise. The temperature was increased from room temperature to 260°C in 3 h, maintained at 260°C for 4 h, and then controlled to decrease to 50°C in 4 h to obtain the solid electrolyte material Li₃(P₁₋ₐSbₐ)S₄ (0.01≤a≤1).

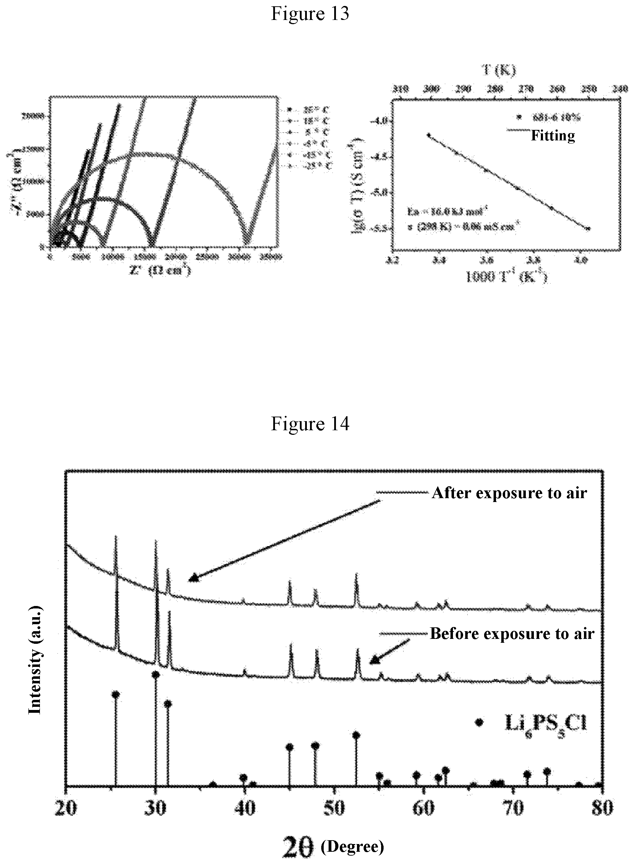

Figure 13 shows graphs of electrochemical impedance at different temperatures and curve of ion conductivity varying with temperature for the material when a=0.1 (i.e., the solid electrolyte material Li₃(P_{0.9}Sb_{0.1})S₄). It can be obtained from Figure 13 that the ion conductivity of this material is 0.06 millisiemens per centimeter at 25°C, and the activation energy is 16.0 kJ per mole.

### Application Example 1: Air stability test and application of the Li₆(P₁₋ₐSbₐ)S₅Cl solid electrolyte material

The Li₆(P₁₋ₐSbₐ)S₅Cl solid electrolyte material obtained in Example 2 was used for dry air stability test (a=0.025, 0.1). In a glove box, the solid electrolyte materials Li₆(P_{0.975}Sb_{0.025})S₅Cl and Li₆(P_{0.9}Sb_{0.1})S₅Cl (100 mg for each) obtained in Example 2 were taken, and put into a 1 ml open glass bottle, respectively, then the glass bottles were placed in a reaction box which was ventilated with a flow of dry air, and allowed to stand at room temperature for 24 h under a dry air flow of 100 ml per minute. Afterwards, the samples were taken out for XRD, ion conductivity and electroconductivity tests.

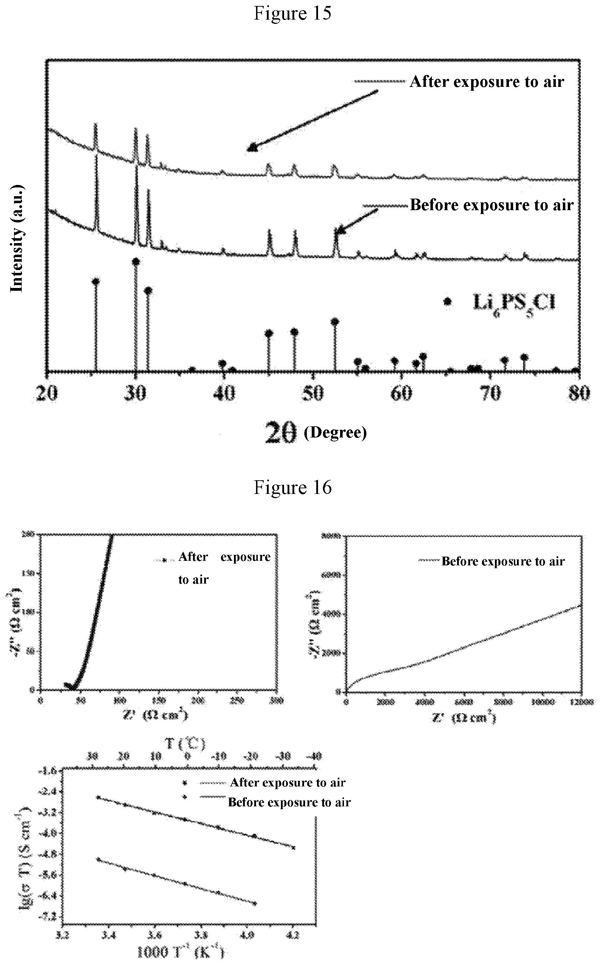

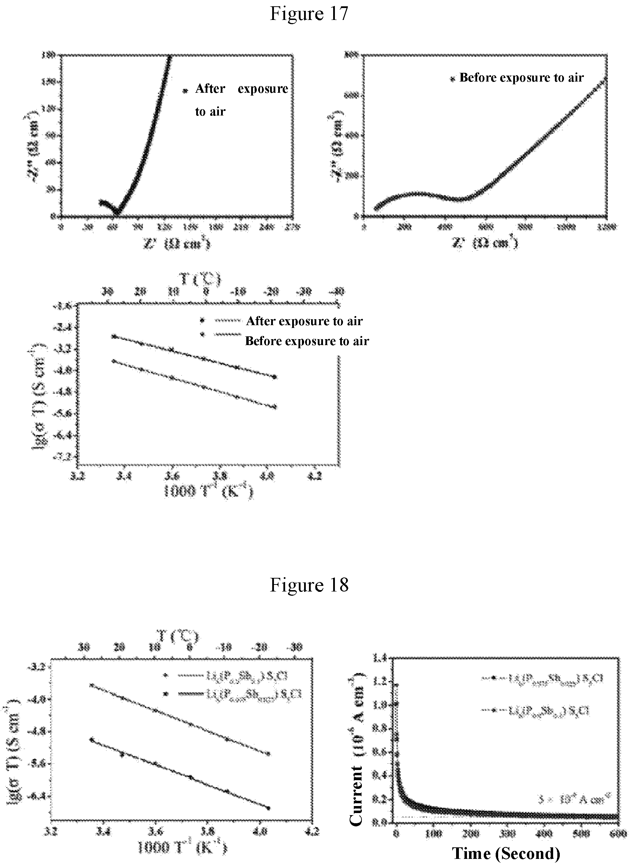

Figure 14 shows comparison of XRD patterns of the material Li₆(P_{0.975}Sb_{0.025})S₅Cl before and after exposure to air. Figure 15 shows comparison of XRD patterns of the material Li₆(P_{0.9}Sb_{0.1})S₅Cl before and after exposure to air. Figure 16 shows graphs concerning comparison of the electrochemical impedance spectroscopies and comparison of the ion conductivities (obtained by calculation) of the material Li₆(P_{0.975}Sb_{0.025})S₅Cl before and after exposure to air. Figure 17 shows graphs concerning comparison of the electrochemical impedance spectroscopies and the comparison of ion conductivities (obtained by calculation) of the material Li₆(P_{0.9}Sb_{0.1})S₅Cl material before and after exposure to air. Figure 18 shows graphs of the ion conductivity varying with temperature change and current-time relationship graphs at a constant external voltage of 0.3 V of these two materials. It can be found from the above Figures that after exposure to air, the XRD of the material Li₆(P_{0.975}Sb_{0.025})S₅Cl does not change much, but the ion conductivity decreases greatly. After 24 hours of action of air atmosphere, the ion conductivity of the material decreases from 2.5 × 10⁻³ Scm⁻¹ to 1.0 × 10⁻⁵ Scm⁻¹. After the action of air atmosphere, the ion conductivity of the material is only 0.004 times that before the action of air. As the Sb content in the solid solution phase structure increases to 10% (a=0.1), the air stability of the obtained solid electrolyte material Li₆(P_{0.9}Sb_{0.1})S₅Cl becomes higher. Similarly, after 24 hours of action of air atmosphere, the XRD pattern of the material does not change much, and the ion conductivity decreases from 1.9×10⁻³ Scm⁻¹ to 2.3×10⁻⁴ Scm⁻¹. After the action of air atmosphere, the ion conductivity of the material is 0.12 times that before the action of air. In addition, the electroconductivities of the above two materials do not change much.

### Application Example 2: Air stability test and application of the solid electrolyte material Li₁₀Ge(P₁₋ₐSbₐ)₂S₁₂

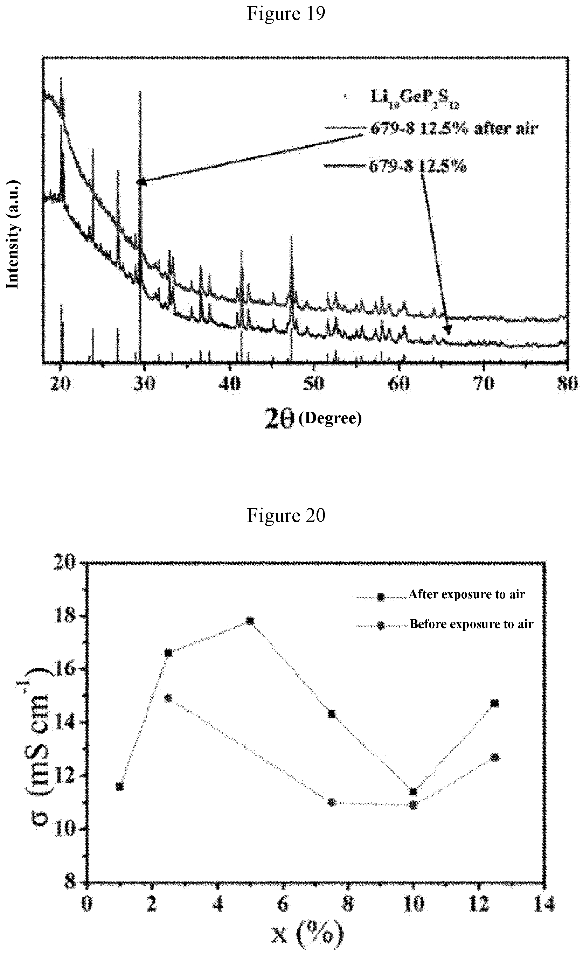

The Li₁₀Ge(P₁₋ₐSbₐ)₂S₁₂ solid electrolyte material obtained in Example 1 was used for dry air stability test (a=0.025, 0.075, 0.1, 0.125). In a glove box, the solid electrolyte materials Li₁₀Ge(P_{0.975}Sb_{0.025})₂S₁₂, Li₁₀Ge(P_{0.925}Sb_{0.075})₂S₁₂, Li₁₀Ge(P_{0.9}Sb_{0.1})₂S₁₂ and Li₁₀Ge(P_{0.875}Sb_{0.125})₂S₁₂ (200 mg each) obtained in Example 1 were taken, and put into a 1 ml open glass bottle, respectively, then the glass bottles were placed in a reaction box which was ventilated with a flow of dry air, and allowed to stand at room temperature for 24 h under a dry air flow of 100 ml per minute. Afterwards, the samples were taken out for XRD, ion conductivity and electroconductivity tests. Figure 19 shows comparison of XRD patterns of the material Li₁₀Ge(P_{0.875}Sb_{0.125})₂S₁₂ before and after exposure to air. Figure 20 shows comparison graphs of ion conductivity change of these four materials before and after exposure to air. It can be found from the above Figures that after exposure to air for 24 h, the XRD of the material Li₁₀Ge(P_{0.875}Sb_{0.125})₂S₁₂ does not change much. Similarly, the ion conductivities of the obtained four materials do not change much before and after exposure to air. After 24 hours of exposure to air, the ion conductivities of the above four materials can still reach 10 mScm⁻² or more. It shows that the material has good air stability and can be used directly in a dry air atmosphere, with great application value.

### Application Example 3: Application of the electrolyte material Li₁₀Ge(P_{0.99}Sb_{0.01})₂S₁₂ in an all-solid-state Li-LiCoO₂ secondary battery

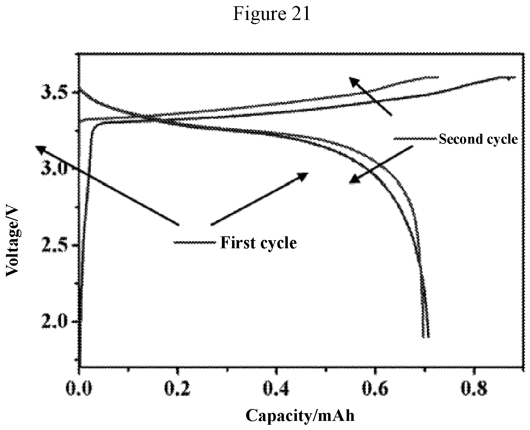

The Li₁₀Ge(P_{0.99}Sb_{0.01})₂S₁₂ electrolyte material obtained in Example 1 was used in an all-solid-state Li-LiCoO₂ secondary battery. The LiCoO₂ positive electrode material used was first coated with LiNbO₂ on the surface through atomic layer deposition (ALD), and the coating layer was about 10 nm. After the completion of coating, the LiCoO₂ positive electrode material, the electrolyte material Li₁₀Ge(P_{0.99}Sb_{0.01})₂S₁₂ and acetylene carbon were mixed at a ratio of 60:30:10 (mass ratio) in a glove box. Specifically, the mixing process refers to grinding with a mortar for 20 min. The ground material was used as a positive electrode powder. A thin metal indium sheet was used as the negative electrode, and the electrolyte material Li₁₀Ge(P_{0.99}Sb_{0.01})₂S₁₂ obtained in Example 1 was also used as the electrolyte. 100 mg of the electrolyte material Li₁₀Ge(P_{0.99}Sb_{0.01})₂S₁₂ was taken and put into a liner for a mold battery with a cross-sectional area of 0.785 cm², and pressed under a pressure of 200 MPa to obtain an electrolyte layer. Subsequently, 10 mg of the positive electrode powder was added to one side of the electrolyte layer, and after spreading evenly, pressing was performed under a pressure of 350 MPa for the second time to laminate the positive electrode layer and the electrolyte layer together. Then an indium sheet as a negative electrode layer was placed on the other side of the electrolyte layer. After the whole process was completed, the liner was put into the mold battery, and sealed by pressing and tightening screws, so as to obtain an all-solid-state Li-LiCoO₂ secondary battery after sealing. A charging-discharging test was performed on the battery with a current density of 32 mA, and a cut-off voltage of 2.0 to 3.6 V Figure 21 shows the charging-discharging curves of the first two cycles of the battery. It can be found in Figure 21 that the reversibility of the charging and discharging process of the battery is good, and the battery capacity remains 0.8 mAh or more. When the capacity of first cycle is 0.870 mAh, the specific capacity is 145.0 mAh per gram calculated on the basis of the mass of lithium cobalt oxide (6 mg). When the discharge capacity of the first cycle is 0.707 mAh, the specific capacity is 117.8 mAh per gram calculated on the basis of the mass of lithium cobalt oxide (6 mg). The charge specific capacity and discharge specific capacity of the second cycle are 121.1 mAh per gram and 116.2 mAh per gram, respectively. The reversibility of the battery cycle is good.

The above experimental results show that the inorganic sulfide electrolyte material provided in the present invention has good air stability, simple preparation method, low production cost, good air stability, and high lithium ion conductivity, and is expected to solve the actual application problem of the inorganic sulfide electrolyte as the electrolyte of a high-performance all-solid-state lithium secondary battery.

Although the general description and specific embodiments have been used to describe the present invention in detail above, some modifications or improvements can be made on the basis of the present invention, which is obvious to a person skilled in the art.

## Claims

1. An inorganic sulfide electrolyte material represented by the following formula (I),
Li₁₀M(P₁₋ₐSbₐ)₂S₁₂, (I);
wherein, M is one or more of Ge, Si and Sn, 0.01≤a≤1;
preferably, 0.01≤a≤0.2.

2. The inorganic sulfide electrolyte material according to claim 1, wherein a is selected from 0.01, 0.025, 0.05, 0.075, 0.1, 0.125, 0.15, 0.2, 0.3, 0.4 or 1;
preferably, the inorganic sulfide electrolyte material represented by the formula (I) is Li₁₀Ge(P_{0.99}Sb_{0.01})₂S₁₂, Li₁₀Ge(P_{0.975}Sb_{0.025})₂S₁₂, Li₁₀Ge(P_{0.925} Sb_{0.075})₂S₁₂, Li₁₀Ge(P_{0.9}Sb_{0.1})₂S₁₂, Li₁₀Ge(P_{0.875}Sb_{0.125})₂S₁₂, Li₁₀Sn(P_{0.95}Sb_{0.05})₂S₁₂ or Li₁₀Si(P_{0.95}Sb_{0.05})₂S₁₂.

3. An inorganic sulfide electrolyte material represented by the following formula (II),
Li₆(P₁₋ₐSbₐ)S₅X, (II);
wherein X is one or more of F, Cl, Br and I, 0.01≤a≤1;
preferably, 0.025≤a≤0.2.

4. The inorganic sulfide electrolyte material according to claim 3, wherein a is selected from 0.025, 0.05, 0.075, 0.1, 0.15, 0.2, 0.5 or 1;
preferably, the inorganic sulfide electrolyte material represented by the formula (II) is Li₆(P_{0.975}Sb_{0.025})S₅Cl or Li₆(P_{0.95}Sb_{0.05})S₅Cl.

5. An inorganic sulfide electrolyte material represented by the following formula (III),
Li₃(P₁₋ₐSbₐ)S₄, (III);
wherein, 0.01≤a≤1;
preferably, 0.05≤a≤0.3.

6. The inorganic sulfide electrolyte material according to claim 5, wherein a is selected from 0.05, 0.1, 0.2 or 0.3.

7. The inorganic sulfide electrolyte material according to any one of claims 1 to 6, wherein the inorganic sulfide electrolyte material is a crystalline, amorphous or crystalline-amorphous composite type; and/or
a working temperature of the sulfide solid electrolyte material is -100°C to 300°C.

8. The preparation method of the inorganic sulfide electrolyte material according to any one of claims 1 to 7, **characterized by** mixing the required raw materials according to the proportion, and grinding, and then performing heat treatment to obtain the sulfide electrolyte materials represented by the formula (I), formula (II), and formula (III), respectively.

9. The preparation method according to claim 8, wherein the time for the grinding is greater than 3 h; and/or the temperature for the heat treatment is greater than 300°C and less than 600°C.

10. The preparation method according to claim 8, wherein the time for the grinding is greater than 3 h; and/or the temperature for the heat treatment is greater than 230°C and less than 600°C.

11. The use of the sulfide solid electrolyte materials according to any one of claims 1 to 7 or the sulfide solid electrolyte materials prepared by the method according to claim 8 or 9 or 10 in the preparation of an all-solid-state lithium secondary battery.

## Patentansprüche

1. Anorganisches Sulfidelektrolytmaterial, das durch die folgende Formel (I) dargestellt ist,
Li₁₀M(P₁₋ₐSbₐ)₂S₁₂, (I);
wobei M eines oder mehrere von Ge, Si und Sn ist, 0,01≤a≤1;
vorzugsweise 0,01:≤a:≤0,2.

2. Anorganisches Sulfidelektrolytmaterial nach Anspruch 1, wobei a ausgewählt ist aus 0,01, 0,025, 0,05, 0,075, 0,1, 0,125, 0,15, 0,2, 0,3, 0,4 oder 1;
das anorganische Sulfidelektrolytmaterial, das durch die Formel (I) dargestellt ist, vorzugsweise Li₁₀Ge(P_{0,99}Sb_{0,01})₂S₁₂, Li₁₀Ge(P_{0,975}Sb_{0,025})₂S₁₂, Li₁₀Ge(P_{0,925}Sb_{0,075})₂S₁₂, Li₁₀Ge(P_{0,9}Sb_{0,1})₂S₁₂, Li₁₀Ge(P_{0,875}Sb_{0,125})₂S₁₂, Li₁₀Sn(P_{0,95}Sb_{0,05})₂S₁₂ oder Li₁₀Si(P_{0,95}Sb_{0,05})₂S₁₂ ist.

3. Anorganisches Sulfidelektrolytmaterial, das durch die folgende Formel (II) dargestellt ist,
Li₆(P₁₋ₐSbₐ)S₅X, (II) ;
wobei X eines oder mehrere von F, Cl, Br und I ist, 0,01≤a≤1;
vorzugsweise 0,25≤a≤0,2.

4. Anorganisches Sulfidelektrolytmaterial nach Anspruch 3, wobei a ausgewählt ist aus 0,025, 0,05, 0,075, 0,1, 0,15, 0,2, 0,5 oder 1;
wobei das anorganische Sulfidelektrolytmaterial, das durch die Formel (II) dargestellt ist, vorzugsweise Li₆(P_{0,975}Sb_{0,025})S₅Cl oder Li₆(P_{0,95}Sb_{0,05}) S₅Cl ist.

5. Anorganisches Sulfidelektrolytmaterial, das durch die folgende Formel (III) dargestellt ist,
Li₃(P₁₋ₐSbₐ)S₄, (III);
wobei 0,01≤a≤1;
vorzugsweise 0,05≤a≤0,3.

6. Anorganisches Sulfidelektrolytmaterial nach Anspruch 5, wobei a ausgewählt ist aus 0,05, 0,1, 0,2 oder 0,3.

7. Anorganisches Sulfidelektrolytmaterial nach einem der Ansprüche 1 bis 6, wobei das anorganische Sulfidelektrolytmaterial ein kristalliner, amorpher oder kristallin-amorpher Verbundtyp ist; und/oder
eine Arbeitstemperatur des Sulfidfestelektrolytmaterials -100 °C bis 300 °C beträgt.

8. Verfahren zur Herstellung des anorganischen Sulfidelektrolytmaterials nach einem der Ansprüche 1 bis 7, **gekennzeichnet durch** Mischen der erforderlichen Rohmaterialien gemäß dem Anteil und Mahlen und dann Durchführen von Wärmebehandlung, um die durch die Formel (I), Formel (II) beziehungsweise Formel (III) dargestellten Sulfidelektrolytmaterialien zu erhalten.

9. Herstellungsverfahren nach Anspruch 8, wobei die Dauer für das Mahlen länger als 3 Stunden beträgt; und/oder die Temperatur für die Wärmebehandlung höher als 300 °C und niedriger als 600 °C ist.

10. Herstellungsverfahren nach Anspruch 8, wobei die Dauer für das Mahlen länger als 3 Stunden beträgt; und/oder die Temperatur für die Wärmebehandlung höher als 230 °C und niedriger als 600 °C ist.

11. Verwendung des Sulfidfestelektrolytmaterials nach einem der Ansprüche 1 bis 7 oder der nach dem Verfahren nach Anspruch 8 oder 9 oder 10 hergestellten Sulfidfestelektrolytmaterialien bei der Herstellung einer Festkörper-Lithium-Sekundärbatterie.

## Revendications

1. Matériau d'électrolyte à base de sulfure inorganique représenté par la formule (I) suivante,
Li₁₀M(P₁₋ₐSbₐ)₂S₁₂, (I) ;
dans lequel M est un ou plusieurs parmi Ge, Si et Sn, 0,01 ≤ a ≤ 1 ;
de préférence, 0,01 ≤ a ≤ 0,2.

2. Matériau d'électrolyte à base de sulfure inorganique selon la revendication 1, dans lequel a est choisi parmi 0,01, 0,025, 0,05, 0,075, 0,1, 0,125, 0,15, 0,2, 0,3, 0,4 ou 1 ;
de préférence, le matériau d'électrolyte à base de sulfure inorganique représenté par la formule (I) est Li₁₀Ge(P_{0,99}Sb_{0,01})₂S₁₂, Li₁₀Ge(P_{0,975}Sb_{0,025})₂S₁₂, Li₁₀Ge(P_{0,925}Sb_{0,075})₂S₁₂, Li₁₀Ge(P_{0,9}Sb_{0,1})₂S₁₂, Li₁₀Ge(P_{0,875}Sb_{0,125})₂S₁₂, Li₁₀Sn(P_{0,95}Sb_{0,05})₂S₁₂ ou Li₁₀Si(P_{0,95}Sb_{0,05})₂S₁₂.

3. Matériau d'électrolyte à base de sulfure inorganique représenté par la formule (II) suivante,
Li₆(P₁₋ₐSbₐ)S₅X, (II) ;
dans lequel X est un ou plusieurs parmi F, Cl, Br et I, 0,01≤a≤1;
de préférence, 0,025 ≤ a ≤ 0,2.

4. Matériau d'électrolyte à base de sulfure inorganique selon la revendication 3, dans lequel a est choisi parmi 0,025, 0,05, 0,075, 0,1, 0,15, 0,2, 0,5 ou 1 ;
de préférence, le matériau d'électrolyte à base de sulfure inorganique représenté par la formule (II) est Li₆(P_{0,975}Sb_{0,025})S₅Cl ou Li₆(P_{0,95}Sb_{0,05})S₅Cl.

5. Matériau d'électrolyte à base de sulfure inorganique représenté par la formule (III) suivante,
Li₃(P₁₋ₐSbₐ)S₄, (III)
dans lequel 0,01 ≤ a ≤ 1 ;
de préférence, 0,05 ≤ a ≤ 0,3.

6. Matériau d'électrolyte à base de sulfure inorganique selon la revendication 5, dans lequel a est choisi parmi 0,05, 0,1, 0,2 ou 0,3.

7. Matériau d'électrolyte à base de sulfure inorganique selon l'une quelconque des revendications 1 à 6, dans lequel le matériau d'électrolyte à base de sulfure inorganique est un type cristallin, amorphe ou composite cristallin-amorphe ; et/ou
une température de fonctionnement du matériau d'électrolyte solide à base de sulfure est comprise entre - 100°C et 300°C.

8. Procédé de préparation du matériau d'électrolyte à base de sulfure inorganique selon l'une quelconque des revendications 1 à 7, **caractérisé par** un mélange des matières premières requises selon la proportion, et un broyage, puis une réalisation d'un traitement thermique pour obtenir les matériaux d'électrolyte à base de sulfure représentés par la formule (I), la formule (II) et la formule (III), respectivement.

9. Procédé de préparation selon la revendication 8, dans lequel le temps pour le broyage est supérieur à 3 h ; et/ou la température pour le traitement thermique est supérieure à 300°C et inférieure à 600°C.

10. Procédé de préparation selon la revendication 8, dans lequel le temps pour le broyage est supérieur à 3 h ; et/ou la température pour le traitement thermique est supérieure à 230°C et inférieure à 600°C.

11. Utilisation des matériaux d'électrolyte solide à base de sulfure selon l'une quelconque des revendications 1 à 7 ou des matériaux d'électrolyte solide à base de sulfure préparés par le procédé selon la revendication 8 ou 9 ou 10 dans la préparation d'une batterie secondaire au lithium entièrement solide.
